# NOUVEAU FASCICULE DE BREVET EUROPEEN

(11) **EP 3 393 823 B2**
(45) Date de publication et mention de la décision concernant l'opposition: **16.07.2025**
(45) Mention de la délivrance du brevet: 01.12.2021
(21) Numéro de dépôt: 16826424.0
(22) Date de dépôt: 21.12.2016
(51) Int. Cl.: B60C 1/00

(54) **PNEUMATIQUE POUR VÉHICULE PORTANT DES LOURDES CHARGES COMPRENANT UNE NOUVELLE BANDE DE ROULEMENT**
REIFEN FÜR LASTKRAFTFAHREUGE ENTHALTEN EINE NEUE LAUFFLÄCHE
TIRE FOR VEHICLES TRANSPORTING HEAVY LOADS COMPRISING A NEW TREAD

(30) Priorité: 22.12.2015 FR 1563039
(43) Date de publication de la demande: 31.10.2018
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR); VALLAT, Perrine, 63040 Clermont-Ferrand Cedex 9 (FR); LOPITAUX, Garance, 63040 Clermont-Ferrand Cedex 9 (FR)
(74) Mandataire: Regimbeau
(86) Numéro de dépôt international: PCT/FR2016/053594
(87) Numéro de publication internationale: WO 2017/109400

(56) Documents cités:
- WO-A1-02/088238
- WO-A1-2015/091929
- WO-A1-2015/091933
- WO-A1-2015/185395

## Description

Le domaine de la présente invention est celui des pneumatiques pour les véhicules portant de lourdes charges, en particulier les véhicules poids-lourds, les bus, les véhicules de génie civil, etc.

Plus particulièrement, l'invention concerne un pneumatique destiné à équiper des véhicules portant de lourdes charges comportant une bande de roulement ayant au moins une nouvelle composition de caoutchouc.

Les pneumatiques destinés aux véhicules portant de lourdes charges comportent des caractéristiques propres de dimensions, de robustesse, d'architecture qui les distinguent des autres pneumatiques, notamment des pneumatiques pour équiper des véhicules de tourisme. Leurs bandes de roulement doivent obéir à un grand nombre de performances techniques telles qu'une résistance élevée à l'usure, une faible résistance au roulement et une bonne résistance aux agressions des corps étrangers qui sont présents sur la surface sur laquelle roule le pneumatique.

En effet, l'usage de ces pneumatiques sur des terrains présentant de nombreux cailloux et autres corps ou des nids-de-poule, génère des agressions de la bande de roulement. Pour les engins portant de lourdes charges, notamment les poids-lourds, il est connu que les bandes de roulement des pneumatiques équipant ces véhicules sont soumises à des chocs répétitifs qui peuvent provoquer des arrachements de matière de la bande de roulement. Il est donc nécessaire que les bandes de roulement des pneumatiques de ces véhicules présentent une bonne résistance aux agressions.

D'autre part, certains véhicules portant des lourdes charges sont également destinés à rouler sur des trajets de plus en plus longs, du fait de l'amélioration du réseau routier et de la croissance du réseau autoroutier dans le monde. L'usure de la bande de roulement de ces pneumatiques doit donc être la plus réduite possible pour une distance de parcours donnée et les pertes d'énergie liées au roulement des pneumatiques doivent également être réduites le plus possible. Il est donc nécessaire, en outre d'une bonne résistance à l'usure et d'une bonne résistance aux agressions, de rechercher également une bonne résistance au roulement.

Les manufacturiers de pneumatique cherchent donc en permanence un bon compromis entre ces trois propriétés. Or, il est bien connu de l'homme de l'art que l'amélioration d'une performance pour des pneumatiques est souvent obtenue au détriment des autres performances.

A titre d'exemple, il est connu, pour améliorer la résistance à l'usure des pneumatiques équipant des véhicules porteurs de lourdes charges, d'augmenter la rigidité à cuit de leur bande de roulement en augmentant le taux de charge renforçante, notamment le noir de carbone, et/ou en utilisant un fort taux d'élastomères synthétiques dans les compositions de caoutchouc constitutives de ces bandes de roulement. Les compositions qui en résultent confèrent aux bandes de roulement correspondantes des résultats satisfaisants pour ce qui est de la rigidité, et donc de la résistance à l'usure. Cependant, ces compositions présentent alors généralement des pertes hystérétiques élevées et donc une forte résistance au roulement.

Il existe donc toujours un besoin non satisfait de fournir un pneumatique pour des véhicules portant de lourdes charges ayant un bon compromis en performances - résistance au roulement, résistance à l'usure et résistance aux agressions - .

La présente invention a donc pour but la mise à disposition d'un pneumatique pour véhicule porteur de lourdes charges palliant les inconvénients précités.

Ce but est atteint par l'invention qui a pour objet un pneumatique destiné à équiper un véhicule portant de lourdes charges choisi parmi les véhicules poids-lourds, les bus, les véhicules de génie civile, les véhicules agricoles ou les avions, ce pneumatique comportant une bande de roulement ayant au moins une composition de caoutchouc à base d'au moins:
- une matrice élastomère comprenant à titre majoritaire un copolymère à base de styrène et de butadiène ayant une température de transition vitreuse Tg strictement supérieure à -65°C et inférieure ou égale à -30°C, de préférence allant de -60°C à -40°C, et en outre au moins un deuxième élastomère diénique choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; le taux du deuxième élastomère diénique va de 5 à 49 pce ;
- une charge renforçante comprenant à titre majoritaire de la silice,
- un système de réticulation chimique,
- un agent de couplage, et
- un système plastifiant comprenant de 0 à 15 pce, de préférence de 0 à 9 pce, d'au moins une résine plastifiante ayant une température de transition vitreuse Tg supérieure ou égale à 20°C et de 0 à 2 pce d'au moins un agent plastifiant liquide à température ambiante, et dont le taux total du système plastifiant dans la composition va de 0 à 17 pce, de préférence de 0 à 11 pce.

L'avantage de cette composition est qu'elle présente un bon compromis de propriétés (hystérèse, rigidité et notamment propriétés limites), notamment un compromis amélioré par rapport aux compositions de caoutchouc utilisées conventionnellement dans la fabrication de bandes de roulements pour pneumatiques destinés à équiper un véhicule portant de lourdes charges.

De manière surprenante, la demanderesse a trouvé que la combinaison d'un copolymère à base de styrène et de butadiène ayant une température de transition vitreuse Tg strictement supérieure à -65°C et inférieure ou égale à -30°C et présent majoritairement dans une composition de caoutchouc avec en outre au moins un deuxième élastomère diénique choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; le taux du deuxième élastomère diénique va de 5 à 49 pce et une charge renforçante comprenant à titre majoritaire de la silice permettait d'obtenir une bande de roulement ayant une bonne résistance à l'usure et une bonne résistance au roulement sans que la performance de résistance aux agressions soit pénalisée. Dans certains modes de réalisation, cette performance est même améliorée. Ce compromis est inattendu.

En effet, l'utilisation, dans le domaine des pneumatiques destinés à équiper des véhicules porteurs de lourdes charges, des compositions à base notamment de copolymère butadiène-styrène (SBR), de noir de carbone et une résine plastifiante est connue notamment de la demande FR2995609. Il est également connu que le remplacement du noir de carbone par de la silice dans une composition de caoutchouc améliore l'hystérèse de cette composition mais au détriment des propriétés limites et des propriétés de rigidité. Ainsi atteindre, et notamment améliorer, le compromis en performances - résistance au roulement, résistance à l'usure et résistance aux agressions - est une difficulté importante pour l'homme du métier en raison des choix antinomiques qu'il est amené à envisager. De manière surprenante, la demanderesse a trouvé que la combinaison spécifique de deux composés, à savoir un copolymère à base de styrène et de butadiène ayant une température de transition vitreuse strictement supérieure à 65°C et inférieure ou égale à -30°C et une silice à titre de charge renforçantes permettait d'obtenir un bon compromis de performances ; la matrice élastomère comprenant en outre au moins un deuxième élastomère diénique différent du copolymère à base de styrène et de butadiène ; en particulier, ledit deuxième élastomère diénique étant choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; de préférence ledit deuxième élastomère diénique peut être un polybutadiène, le taux du deuxième élastomère diénique peut aller de 5 à 49 pce.

Selon un mode de réalisation, le système plastifiant peut comprendre de 2 à 15 pce, de préférence de 2 à 9 pce de la résine plastifiante, le taux total du système plastifiant dans la composition va de 2 à 17 pce, de préférence de 2 à 11 pce.

De préférence, le copolymère à base de styrène et de butadiène peut être obtenu par polymérisation en solution.

De préférence, le copolymère à base de styrène et de butadiène a une température de transition vitreuse Tg allant de -60°C à -40°C.

De préférence, le copolymère à base de styrène et à base de butadiène peut être un copolymère styrène-butadiène.

De préférence, le taux du deuxième élastomère diénique peut aller de 15 à 35 pce.

Dans un mode de réalisation de l'invention, la matrice élastomère peut comprendre en outre au moins un troisième élastomère diénique différent du copolymère à base de styrène et de butadiène et du deuxième élastomère diénique, en particulier le troisième élastomère diénique peut être choisi parmi le caoutchouc naturel et un élastomère isoprénique, de préférence il peut être constitué par du caoutchouc naturel.

De préférence, le taux du deuxième élastomère diénique peut aller de 0,5 à 35 pce et un taux du troisième élastomère diénique peut aller de 0,5 à 35 pce, de préférence le taux du deuxième élastomère diénique peut aller de 9 à 31 pce et un taux du troisième élastomère diénique peut aller de 4 à 24 pce.

De préférence, la composition peut comprendre en outre du noir de carbone ; en particulier le taux de noir de carbone peut être inférieur ou égal à 10 pce, inférieur ou égal à 5 pce, de préférence le taux de noir de carbone peut aller de 0,5 à 4 pce.

De préférence, le taux de la charge renforçante peut aller de 55 à 200 pce, de préférence de 55 à 150 pce, de manière plus préférée de 55 à 80 pce

De préférence, la résine plastifiante peut avoir une température de transition vitreuse Tg supérieure ou égale à 30°C, de préférence allant de à 30 à 100°C ; et en particulier, la résine plastifiante peut être choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère, , notamment les mélanges de résines d'homopolymère ou copolymère de coupe C5 et de résines d'homopolymère ou copolymère de coupe C9 et les résines de copolymère d'alpha-méthyl-styrène et les mélanges de ces résines.

Le système plastifiant comprend de 0 à 2 pce d'au moins un agent plastifiant liquide à température ambiante (23°C).

Dans un mode de réalisation, la composition peut être exempte d'un système plastifiant.

De préférence, le pneumatique de l'invention peut être destiné à équiper un véhicule poids-lourd.

### I - DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Par « pneumatique destiné à équiper un véhicule portant de lourdes charges » on entend de manière générique tout pneumatique destiné à équiper des véhicules poids-lourds, des bus, des véhicules de génie civil, des véhicules agricoles ou des avions. L'invention est particulièrement bien adaptée aux pneumatiques destinés à équiper des véhicules poids-lourds.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Par « matrice élastomère » ou « matrice élastomérique », on entend l'ensemble du ou des élastomère(s) présent(s) dans la composition de caoutchouc.

Par élastomère (ou indistinctement caoutchouc) « diénique » qu'il soit naturel ou synthétique, doit être compris un élastomère constitué au moins en partie (c'est-à-dire un homopolymère ou un copolymère) de monomère(s) diène(s) (i.e., porteur(s) de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique « fortement insaturé » un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :
(a) - tout homopolymère d'un monomère diène conjugué, notamment tout homopolymère obtenu par polymérisation d'un monomère diène conjugué ayant de 4 à 12 atomes de carbone ;
(b) - tout copolymère obtenu par copolymérisation d'un ou plusieurs diènes conjugués entre eux ou avec un monomère éthylène ou avec un ou plusieurs composés vinyle aromatique ayant de 8 à 20 atomes de carbone ;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Les élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).

On peut aussi citer comme élastomères diéniques fonctionnels ceux préparés par l'utilisation d'un amorceur fonctionnel, notamment ceux portant une fonction amine ou étain (voir par exemple WO 2010072761).

Comme autres exemples d'élastomères diéniques fonctionnalisés, on peut citer également des élastomères (tels que BR, NR ou IR) du type époxydés.

Par « majoritairement » ou « à titre majoritaire », on entend au sens de la présente invention, que le composé est majoritaire parmi les composés du même type dans la composition, c'est-à-dire que c'est celui qui représente la plus grande quantité en masse parmi les composés du même type. En d'autres termes, la masse de ce composé représente au moins 51 % de la masse totale des composés du même type dans la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse totale des élastomères, autrement dit la masse de cet élastomère représente au moins 51 % de la masse totale des élastomères. De la même manière, une charge dite majoritaire est celle représentant la plus grande masse parmi les charges de la composition. En d'autres termes, la masse de cette charge représente au moins 51% de la masse totale des charges dans la composition.

Par « minoritaire », on entend un composé qui ne représente pas la fraction massique la plus grande parmi les composés du même type.

Toutes les valeurs de température de transition vitreuse « Tg » sont mesurées de manière connue par DSC (Differential Scanning Calorimetry) selon la norme ASTM D3418 (1999).

Par « exempte de composé X », on entend que le composé X n'est pas détectable par des mesures connues par l'homme du métier ou que ce composé X est présent à des quantités faibles qui représentent des impuretés (c'est-à-dire de l'ordre du ppm (parties en poids par million)).

Dans le cadre de l'invention, les produits carbonés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les composés (tels que les monomères, les polymères), les réactifs et autres composants mentionnés dans la description, tel que les plastifiants, les charges, etc.

### Copolymère à base de styrène et de butadiène

La matrice élastomérique de la composition de caoutchouc du pneumatique conforme à l'invention comprend à titre majoritaire un copolymère à base de styrène et à base de butadiène ayant une température de transition vitreuse Tg strictement supérieure à -65°C et inférieure ou égale à -30°C et en outre au moins un deuxième élastomère diénique choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; le taux du deuxième élastomère diénique va de 5 à 49 pce. En d'autres termes, la masse du copolymère à base de styrène et à base de butadiène ayant une température de transition Tg vitreuse strictement supérieure à -65°C et inférieure ou égale à -30°C représente au moins 51 % de la masse totale de la matrice élastomérique.

Par copolymère à base de styrène et de butadiène, on entend ici un copolymère d'au moins un monomère styrène et d'au moins un monomère butadiène (et bien entendu également tout mélange de tels copolymères) ayant une température de transition vitreuse Tg strictement supérieure à -65°C et inférieure ou égale à -30°C; en d'autres termes, ledit copolymère à base de styrène et de butadiène comporte par définition au moins des unités styrène (issues du monomère styrène) et des unités butadiène (issues du monomère butadiène) et a une température de transition vitreuse Tg strictement supérieure à -65°C et inférieure ou égale à -30°C.

A titre de monomères butadiènes conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrènes conviennent notamment le styrène, les méthylstyrènes, le para-tertiobutylstyrène, les méthoxystyrènes, les chlorostyrènes.

Le copolymère à base de styrène et de butadiène peut avoir toute microstructure qui est fonction des conditions de polymérisation utilisées, notamment de la présence ou non d'un agent modifiant et/ou randomisant et des quantités d'agent modifiant et/ou randomisant employées.

De préférence, le copolymère à base de styrène et de butadiène peut être obtenu par polymérisation en solution. Plus préférentiellement, il peut s'agit d'un copolymère styrène-butadiène (en abrégé SBR), notamment un SBR préparé par polymérisation en solution (en abrégé S-SBR). On notera avantageusement que la composition de caoutchouc du pneumatique conforme à l'invention peut ne pas comprendre ou peut comprendre en une quantité très faible un copolymère à base de styrène et de butadiène étendu ; autrement dit le taux de copolymère à base de styrène et de butadiène étendu, si ce type de copolymère est présent, peut être inférieur ou égal à 2 pce, de manière préférée à ce taux peut correspondre à une impureté. Plus particulièrement, la composition de caoutchouc du pneumatique conforme à l'invention peut être exempte de copolymère à base de styrène et de butadiène étendu. Par copolymère étendu, on entend un copolymère étendu et stabilisé avec une huile, notamment de type paraffinique, naphténique ou aromatique.

Parmi les copolymères à base de styrène et de butadiène, en particulier SBR, notamment S-SBR, on peut citer notamment ceux ayant une teneur en styrène comprise entre 5% et 60% en poids, et plus particulièrement entre 20% et 50% en poids par rapport au poids du copolymère, une teneur molaire (% molaire) en liaisons -1,2 de la partie butadiénique comprise entre 4% et 75%, une teneur molaire (% molaire) en liaisons trans-1,4 de la partie butadiénique comprise entre 10% et 80%. La teneur en styrène en poids, la teneur molaire des liaisons -1,2 de la partie butadiénique et la teneur molaire en liaison trans-1,4 sont mesurées par des techniques bien connues de l'homme du métier.

De préférence, la température de transition vitreuse Tg du copolymère à base de styrène et de butadiène, en particulier du SBR (notamment d'un S-SBR), peut aller de - 60°C à -40°C. L'homme du métier sait comment modifier la microstructure d'un copolymère à base de styrène et de butadiène, en particulier d'un SBR (notamment d'un S-SBR), pour ajuster sa Tg, notamment en jouant sur les teneurs en styrène, en liaisons -1,2 de la partie butadiénique ou encore en liaisons trans-1,4 de la partie butadiénique.

Préférentiellement, le taux du copolymère à base de styrène et de butadiène, notamment le SBR (en particulier le S-SBR) dans la composition de caoutchouc du pneumatique conforme à l'invention peut aller de 51 à 100 pce, de préférence de 60 à 100 pce, de manière encore plus préférée 60 à 85 pce.

Le copolymère à base de styrène et de butadiène, en particulier le SBR et notamment le S-SBR, peut avantageusement être utilisé en coupage (mélange) avec un ou plusieurs autre(s) élastomère(s) diénique(s) différent(s) dudit copolymère à base de styrène et de butadiène. Dans le cas d'un coupage, il est notamment entendu que la somme des différents élastomères utilisés est égale à 100 pce.

Au copolymère à base de styrène et de butadiène ci-dessus, en particulier au SBR et notamment au S-SBR, est associé au moins un deuxième élastomère diénique, différent dudit copolymère à base de styrène et de butadiène ; c'est-à-dire que le deuxième élastomère diénique ne comportant pas des unités issues de styrène et de butadiène. Lorsqu'il est présent, le deuxième élastomère diénique peut être choisi dans le groupe formé par les polybutadiènes (BR), le caoutchouc naturel (NR), les isoprènes de synthèse, (IR), les copolymères butadiènes autre que les copolymères butadiène-styrène, les copolymères d'isoprènes et les mélanges de ces polymères et copolymères. De préférence, ledit deuxième élastomère diénique peut être un polybutadiène (BR). le taux du deuxième élastomère diénique va de 5 à 49 pce (pour rappel, pce signifiant parties en poids pour cent parties d'élastomère, c'est-à-dire du total des élastomères présents dans la bande de roulement), de préférence de 15 à 35 pce.

Dans un autre mode de réalisation du pneumatique conforme à l'invention, au copolymère à base de styrène et de butadiène, en particulier au SBR et notamment au S-SBR, peut être associé éventuellement au moins un deuxième élastomère diénique, différent dudit copolymère à base de styrène et de butadiène (c'est-à-dire ne comportant pas des unités issues de styrène et de butadiène) et un troisième élastomère différent dudit copolymère à base de styrène et de butadiène et du deuxième élastomère diénique. De préférence, le troisième élastomère diénique peut être un élastomère isoprénique. Préférentiellement, le deuxième élastomère diénique peut être choisi dans le groupe formé par les polybutadiènes (BR) et les copolymères butadiènes autre que les copolymères butadiène-styrène ; et le troisième élastomère diénique peut être choisi dans le groupe formé par le caoutchouc naturel (NR), les isoprènes de synthèse, (IR), les copolymères d'isoprènes et les mélanges de ces polymères et copolymères. De préférence, le deuxième élastomère diénique peut être le butadiène et le troisième élastomère diénique peut être du caoutchouc naturel ou un isoprène de synthèse. Préférentiellement, le taux du deuxième élastomère peut aller de 0,5 à 35 pce, et le taux du troisième élastomère peut aller de 0,5 à 35 pce ; de manière plus préférée, le taux du deuxième élastomère peut aller de 9 à 31 pce et le taux du troisième élastomère peut aller de 4 à 24 pce.

Parmi les polybutadiènes ou copolymères de butadiène utilisés dans les coupages ci-dessus, conviennent en particulier les polybutadiènes ayant une teneur (% molaire) en unités -1,2 comprise entre 4% et 80% ou ceux ayant une teneur (% molaire) en cis-1,4 supérieure à 80% plus particulièrement supérieure à 90%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Parmi les élastomères isopréniques (i.e., homopolymères ou copolymères d'isoprène) utilisés dans les coupages ci-dessus, on citera en particulier NR, IR, les copolymères d'isoprène tels que copolymères d'isobutène-isoprène (caoutchouc butyle ou IIR), d'isoprène-styrène (SIR), d'isoprène-butadiène (BIR) ou d'isoprène-butadiène-styrène (SBIR). Parmi ces polyisoprènes de synthèse, peuvent être utilisés de préférence des polyisoprènes ayant un taux (% molaire) de liaisons cis-1,4 supérieur à 90%, plus préférentiellement encore supérieur à 98%.

Aux élastomères diéniques précédemment décrits peuvent être également associés, en quantité minoritaire, des élastomères synthétiques autres que diéniques, voire des polymères autres que des élastomères, par exemple des polymères thermoplastiques.

### Charge renforçante

La composition de caoutchouc utilisée dans les pneumatiques de l'invention comporte au moins une charge renforçante comprenant à titre majoritaire de la silice, c'est-à-dire que la masse de la silice représente au moins 51% de la masse totale des constituants de la charge renforçante. De préférence, la masse silice représente plus de 60 %, de préférence plus de 70% de la masse total de la charge renforçante.

Dans le présent exposé, la surface spécifique BET est déterminée de manière connue par adsorption de gaz à l'aide de la méthode de Brunauer-Emmett-Teller décrite dans « The Journal of the American Chemical Society » Vol. 60, page 309, février 1938, plus précisément selon la norme française NF ISO 9277 de décembre 1996 (méthode volumétrique (5 point- gaz : azote - dégazage : 1heure à 160°C - domaine de pression relative p/po : 0.05 à 0.17). La surface spécifique CTAB est la surface externe déterminée selon la norme française NF T45-007 de novembre 1987 (méthode B)

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyles (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales de type siliceuses, préférentiellement la silice (SiO2). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP» ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO 03/016387.

Bien entendu, on entend également par charge renforçante inorganique des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganiques non siliceuses, on peut citer les charges minérales du type alumineuses, en particulier de l'alumine (Al₂O₃) ou des (oxydes)hydroxydes d'aluminium, ou encore des oxydes de titane renforçants, par exemple décrits dans US 6 610 261 et US 6 747 087. Les charges inorganiques non siliceuses, lorsque présentes, sont minoritaires dans la charge renforçante.

L'état physique sous lequel se présente la charge renforçante inorganique est indifférent, que ce soit sous forme de poudre, de microperles, de granulés, ou encore de billes.

Selon un mode de réalisation, le taux de la charge renforçante, dans la composition de caoutchouc du pneumatique conforme à l'invention peut aller de 55 pce à 200 pce, de préférence de 55 à 150 pce, de manière plus préférée va de 55 à 80 pce. Ces plages préférentielles s'appliquent à l'un quelconque des modes de réalisation de l'invention.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

### Noir de carbone :

Selon un mode de réalisation du pneumatique conforme à l'invention, la composition de caoutchouc peut comprendre en outre du noir de carbone.

Le noir de carbone, lorsqu'il est présent, peut être utilisé de préférence à un taux inférieur ou égal à 10 pce, de préférence inférieur ou égal à 5 pce. De préférence, le taux du noir de carbone peut aller de 0,5 à 4 pce. Ces plages préférentielles s'appliquent à l'un quelconque des modes de réalisation de l'invention.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

### Les agents de couplage

Pour coupler la charge inorganique renforçante à la matrice élastomérique (c'est-à-dire au copolymère à base de styrène et de butadiène, notamment au SBR et S-SBR, et aux élastomères diéniques lorsqu'ils sont présents), on peut utiliser de manière bien connue un agent de couplage (ou agent de liaison) au moins bifonctionnel destiné à assurer une connexion suffisante, de nature chimique et/ou physique, entre la charge inorganique (surface de ses particules) et la matrice élastomérique. On peut utiliser en particulier des organosilanes ou des polyorganosiloxanes au moins bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante :

(I) Z - A - Sₓ - A - Z,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 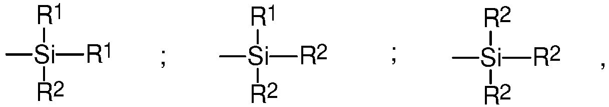 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition. Ces plages préférentielles s'appliquent à l'un quelconque des modes de réalisation de l'invention.

### Les agents de recouvrement :

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvreà l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### Système plastifiant

La composition de caoutchouc des pneumatiques conformes à l'invention peut comprendre de 0 à 17 pce d'un système plastifiant, ce système comprenant de 0 à 15 pce d'au moins une résine plastifiante ayant une température de transition vitreuse Tg supérieure ou égale à 20°C, et de 0 à 2 pce d'un plastifiant liquide à température ambiante.

De manière connue de l'homme du métier, la dénomination "résine" est réservée dans la présente demande, par définition, à un composé qui est solide à température ambiante (23°C), par opposition à un plastifiant liquide à température ambiante tel qu'une huile.

Les résines plastifiantes sont des polymères bien connus de l'homme du métier. Ce sont des résines hydrocarbonées essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions d'élastomère(s) diénique(s) auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante peut présenter au moins une quelconque des caractéristiques suivantes :
- une Tg supérieure ou égale à 20°C (en particulier compris entre 30°C et 100°C), plus préférentiellement supérieure ou égale à 30°C (en particulier entre 30 C et 95°C);
- un point de ramollissement supérieur ou égal à 40°C (en particulier compris entre 40°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

Plus préférentiellement, la résine plastifiante peut présenter l'ensemble des caractéristiques préférentielles ci-dessus.

A titres d'exemples de telles résines plastifiante, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les mélange de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Parmi les résines de copolymères ci-dessus, on peut citer plus particulièrement celles choisies dans le groupe constitué par les résines de copolymère CPD/ vinylaromatique, les résines de copolymère DCPD/ vinylaromatique, les résines de copolymère CPD/ terpène, les résines de copolymère DCPD/ terpène, les résines de copolymère terpène phénol, les résines de copolymère CPD/ coupe C5, les résines de copolymère DCPD/ coupe C5, les résines de copolymère CPD/ coupe C9, les résines de copolymère DCPD/ coupe C9, les mélange de résines de coupe C5 et de coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alphapinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère CPD, les résines d'homopolymère DCPD, les résines de copolymère CPD/ styrène, les résines de copolymère DCPD/ styrène, les résines de polylimonène, les résines de copolymère limonène/ styrène, les résines de copolymère limonène/CPD, les résines de copolymère limonène/ DCPD,les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, ou encore par la société Struktol sous dénomination "40 MS" ou "40 NS" (mélanges de résines aromatiques et/ou aliphatiques).

Le système plastifiant peut comporter d'autre part un plastifiant liquide à température ambiante (à 23°C) présent selon un taux inférieur ou égale à 2 pce.

Toute huile d'extension, qu'elle soit de nature aromatique ou non aromatique, tout plastifiant liquide à température ambiante connu pour ses propriétés plastifiantes vis-à-vis d'élastomères diéniques, peut être utilisable en plus de la résine plastifiante. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme plastifiants liquides à température ambiante, on peut notamment citer les polymères diéniques liquides, les huiles polyoléfiniques, les huiles naphténiques, les huiles paraffiniques, les huiles DAE (*Distillate Aromatic Extracts*)*,* les huiles MES (*Medium Extracted Solvates*), les huiles TDAE (*Treated Distillate Aromatic Extracts*)*,* les huiles RAE (*Residual Aromatic Extract oils*)*,* les huiles TRAE (*Treated Residual Aromatic Extract*)*,* les huiles SRAE (*Safety Residual Aromatic Extract oils*)*,* les huiles minérales, les huiles végétales, les plastifiants éthers, les plastifiants esters, les plastifiants phosphates, les plastifiants sulfonates et les mélanges de ces composés. Selon un mode de réalisation plus préférentiel, le plastifiant liquide à température ambiante est choisi dans le groupe constitué par les huiles MES, les huiles TDAE, les huiles naphténiques, les huiles végétales et les mélanges de ces huiles.

Dans un mode de réalisation, la composition de caoutchouc de pneumatiques conformes à l'invention comprend de 0 à 17 pce, de préférence de 0 à 11 pce, d'un système plastifiant comprenant de 0 à 15 pce, de préférence de 0 à 9 pce, d'au moins une résine plastifiante ayant une température de transition vitreuse Tg supérieure ou égale à 20°C, et de 0 à 2 pce d'un plastifiant liquide à température ambiante. Les caractéristiques préférées de la résine plastifiante telle que décrite ci-dessus et les caractéristiques préférées du plastifiant liquide à température ambiante, lorsqu'il est présent, s'appliquent à ce mode de réalisation.

Dans un autre mode de réalisation, la composition de caoutchouc de pneumatiques conformes à l'invention peut comprendre de 2 à 17 pce, de préférence de 2 à 11 pce, d'un système plastifiant comprenant de 2 à 15 pce, de préférence de 2 à 9 pce, d'au moins une résine plastifiante ayant une température de transition vitreuse Tg supérieure ou égale à 20°C, et de 0 à 2 pce d'un plastifiant liquide à température ambiante. Les caractéristiques préférées de la résine plastifiante telle que décrite ci-dessus et les caractéristiques préférées du plastifiant liquide à température ambiante, lorsqu'il est présent, s'appliquent à ce mode de réalisation.

Dans un autre mode de réalisation, le système de plastifiant peut être constitué de 0 ou de 2 à 15 pce, de préférence de 0 ou de 2 à 9 pce, d'une résine plastifiante ayant une température de transition vitreuse Tg supérieure ou égale à 20°C ou d'un mélange de résines plastifiantes ayant une température de transition vitreuse Tg supérieure ou égale à 20°C. Dans ce mode de réalisation, la composition de caoutchouc de pneumatiques conformes à l'invention est exempte de plastifiant liquide à température ambiante. Les caractéristiques préférées de la résine plastifiante telle que décrite ci-dessus s'appliquent à ce mode de réalisation.

Dans un autre mode de réalisation, la composition de caoutchouc de pneumatiques conformes à l'invention peut être exempte de système plastifiant.

### Additifs divers

Les compositions de caoutchouc des pneumatiques conformes à l'invention peuvent comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des agents de protection tels que cires anti-ozone comme par exemple de la paraffine, anti-ozonants chimiques, anti-oxydants, des agents anti-fatigue, des pigments.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris entre 0,5 et 12 pce, en particulier entre 1 et 10 pce. Ces plages préférentielles s'appliquent à l'un quelconque des modes de réalisation de l'invention. L'accélérateur primaire de vulcanisation est utilisé à un taux préférentiel compris entre 0,5 et 10 pce, plus préférentiellement compris entre 0,5 et 5,0 pce. Ces plages préférentielles s'appliquent à l'un quelconque des modes de réalisation de l'invention.

Le taux de soufre utilisé dans la composition de caoutchouc de la bande de roulement conforme à l'invention est le plus souvent compris entre 0,5 et 3,0 pce, celui de l'accélérateur primaire entre 0,5 et 5,0 pce. Ces plages préférentielles s'appliquent à l'un quelconque des modes de réalisation de l'invention.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Mode de réalisation préférés

Parmi les modes de réalisation préférés de l'invention, on peut citer :
- un pneumatique pour véhicule poids portant de lourdes charges comportant une bande de roulement ayant au moins une composition de caoutchouc à base d'au moins :
   - une matrice élastomère comportant de 51 à 85 pce d'un copolymère à base de styrène et de butadiène ayant une température de transition vitreuse Tg strictement supérieure à -65°C et inférieure ou égale à -30°C, et de 15 pce à 49 pce d'un polybutadiène ;
   - de 55 à 100 pce d'une charge renforçante comprenant à titre majoritaire de la silice ;
   - d'un système de réticulation chimique ;
   - d'un agent de couplage ; et
   - de 0 à 4 pce de noir de carbone ;
   les caractéristiques préférées de chacun des constituants tels que décrits ci-dessus s'appliquent à ce mode de réalisation ;
- un pneumatique pour véhicule poids portant de lourdes charges comportant une bande de roulement ayant au moins une composition de caoutchouc à base d'au moins :
   - une matrice élastomère comportant de 51 à 85 pce d'un copolymère à base de styrène et de butadiène ayant une température de transition vitreuse Tg strictement supérieure à -65°C et inférieure ou égale à -30°C, et de 15 pce à 49 pce d'un polybutadiène ;
   - de 55 à 100 pce d'une charge renforçante comprenant à titre majoritaire de la silice ;
   - d'un système de réticulation chimique ;
   - d'un agent de couplage ;
   - de 0 à 4 pce de noir de carbone ; et
   - d'un système plastifiant comprenant de 2 à 9 pce d'au moins une résine plastifiante ayant une température de transition vitreuse Tg supérieure ou égale à 20°C, et de 0 à 2 pce d'un plastifiant liquide à température ambiante, le taux total du système plastifiant dans la composition va de 2 à 11 pce;
   les caractéristiques préférées de chacun des constituants tels que décrits ci-dessus s'appliquent à ce mode de réalisation ;
- un pneumatique pour véhicule poids portant de lourdes charges comportant une bande de roulement ayant au moins une composition de caoutchouc à base d'au moins :
   - une matrice élastomère comportant de 51 à 75 pce d'un copolymère à base de styrène et de butadiène ayant une température de transition vitreuse Tg strictement supérieure à -65°C et inférieure ou égale à -30°C, de 9 pce à 31 pce de polybutadiène et de 4 à 16 pce de caoutchouc naturel ;
   - de 55 à 100 pce d'une charge renforçante comprenant à titre majoritaire de la silice ;
   - d'un système de réticulation chimique ;
   - d'un agent de couplage ; et
   - de 0 à 4 pce;
   les caractéristiques préférées de chacun des constituants tels que décrits ci-dessus s'appliquent à ce mode de réalisation ;
- un pneumatique pour véhicule poids portant de lourdes charges comportant une bande de roulement ayant au moins une composition de caoutchouc à base d'au moins :
   - une matrice élastomère comportant de 51 à 75 pce d'un copolymère à base de styrène et de butadiène ayant une température de transition vitreuse Tg strictement supérieure à -65°C et inférieure ou égale à -30°C, de 9 pce à 31 pce de polybutadiène et de 4 à 16 pce de caoutchouc naturel ;
   - de 55 à 100 pce d'une charge renforçante comprenant à titre majoritaire de la silice ;
   - d'un système de réticulation chimique ;
   - d'un agent de couplage ;
   - de 0 à 4 pce ; et
   - d'un système plastifiant comprenant de 2 à 9 pce, d'au moins une résine plastifiante ayant une température de transition vitreuse Tg supérieure ou égale à 20°C, et de 0 à 2 pce d'un plastifiant liquide à température ambiante, le taux total du système plastifiant dans la composition va de 2 à 11 pce ;
   les caractéristiques préférées de chacun des constituants tels que décrits ci-dessus s'appliquent à ce mode de réalisation.

### Fabrication de la composition et du pneumatique

La composition de caoutchouc peut être fabriquée dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation.

Après l'incorporation de tous les ingrédients de la composition de caoutchouc, la composition finale ainsi obtenue peut être ensuite calandrée, par exemple sous la forme d'une feuille ou d'une plaque, notamment pour une caractérisation au laboratoire, ou encore extrudée, pour former par exemple un profilé de caoutchouc utilisé comme bande de roulement d'un pneumatique pour un véhicule portant de lourdes charges, notamment pour un véhicule poids-lourd ou pour un véhicule de génie civil.

Le pneumatique conforme à l'invention est de préférence un pneumatique destiné à équiper un véhicule portant de lourdes de charges, tels que les véhicules poids-lourds, les bus, les véhicules de génie civil. De manière préférentielle, le pneumatique conforme à l'invention est un pneumatique destiné à équiper un véhicule poids-lourd.

Le pneumatique peut être fabriqué selon tout procédé bien connu de l'homme du métier.

Les caractéristiques précitées de la présente invention, ainsi que d'autres, seront mieux comprises à la lecture de la description suivante de plusieurs exemples de réalisation de l'invention, donnés à titre illustratif et non limitatif.

### II - EXEMPLES DE REALISATION DE L'INVENTION

### II-1. Mesures et tests utilisés :

### Essais de traction

Ces essais de traction permettent de déterminer les contraintes d'élasticité et les propriétés à la rupture. Sauf indication différente, ils sont basés sur la norme française NFT 46-002.

Les allongements à la rupture (en %) sont mesurés. Toutes ces mesures de traction sont effectuées à la température de 60°C ± 2°C, et dans les conditions normales d'hygrométrie (50 ± 5% d'humidité relative).

### Déchirabilité

Les indices de déchirabilité sont mesurés à 100°C. On détermine notamment la force à exercer pour obtenir la rupture (FRD, en Mpa (en N/mm)) et on mesure la déformation à rupture (DRD, en %) sur une éprouvette de dimensions 10 x 105 x 2,5 mm entaillée au centre de sa longueur par 3 entailles sur une profondeur de 5 mm, pour provoquer la rupture de l'éprouvette. Ainsi on peut déterminer l'Energie pour provoquer la rupture (Energie Rupture) de l'éprouvette qui est le produit du FRD et DRD.

Pour plus de visibilité, les résultats seront indiqués en base 100 ; la valeur 100 étant attribuée au témoin T0. Un résultat inférieur à 100 pour l'allongement à la rupture (%) et pour la déchirabilité indiquera une diminution de la valeur concernée, et inversement, un résultat supérieur à 100, indiquera une augmentation de la valeur concernée.

### Propriétés dynamiques

Les propriétés dynamiques et notamment tan(δ)ₘₐₓ, représentative de l'hystérèse, sont mesurées sur un viscoanalyseur (Metravib VA4000), selon la norme ASTM D 5992-96. On enregistre la réponse d'un échantillon de la composition vulcanisée (éprouvettes cylindriques de 4 mm d'épaisseur et de 400 mm² de section), soumis à une sollicitation sinusoïdale en cisaillement simple alterné, à la fréquence de 10Hz, à une température de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G^{∗}) et le facteur de perte tan(δ). Pour le cycle aller, on indique la valeur maximale de tan(δ) observée, noté tan(δ)ₘₐₓ ; ainsi que le module G^{∗} à 50% de déformation noté G^{∗}50%.

Pour plus de visibilité, les résultats seront indiqués en base 100 ; la valeur 100 étant attribuée au témoin T0. Un résultat inférieur à 100 indiquant une diminution de la valeur de tan(δ)max (diminution de la résistance au roulement), et inversement, un résultat supérieur à 100, indiquera une augmentation de la valeur de tan(δ)ₘₐₓ (augmentation de la résistance au roulement).

Les résultats de G^{∗} sont également exprimés en base 100, la valeur 100 étant attribuée au témoin T0. Un résultat inférieur à 100 indiquant une diminution de la valeur concernée, et inversement, un résultat supérieur à 100, indiquera une augmentation de la valeur concernée.

### II-2 : Préparation des compotions de caoutchouc :

On procède pour les essais qui suivent à la préparation des compositions de la manière suivante: on introduit dans un mélangeur interne, rempli à 70% et dont la température initiale de cuve est d'environ 50°C, les élastomères diéniques mélangés (SBR, BR et NR lorsqu'il est présent), la charge renforçante (silice), éventuellement le noir de carbone, l'agent de couplage puis, après une à deux minutes de malaxage, les divers autres ingrédients (y compris la résine lorsqu'elle est présente) à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C.

On récupère le mélange ainsi obtenu, on le refroidit puis on ajoute le système de vulcanisation (soufre et accélérateur) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après cuisson, soit sous la forme de profilés utilisables directement, après découpage et/ou assemblage aux dimensions souhaitées, par exemple comme produits semi-finis pour pneumatiques, en particulier comme bandes de roulement de pneumatiques.

La composition T0 est une composition témoin classiquement utilisée et commercialisée pour la fabrication de bande de roulement de pneumatiques destinés à équiper des véhicules portant de lourdes charges. Elle représente donc un compris en performances -résistance au roulement, résistance à l'usure et résistance aux agressions - pour des pneumatiques qui sont commercialisés.

On a recherché à atteindre, voir à améliorer ce compromis, en modifiant plusieurs paramètres dans une composition de caoutchouc. Ces modifications sont détaillées dans les essais A. Les essais B à D illustrent d'autres modes de réalisation de l'invention.

### II-3 : Essai A :

Les exemples présentés dans le tableau 1 ont pour objet de comparer les différentes propriétés de caoutchouterie des compositions C1 et C2 conforme à l'invention à une série de compositions témoins (T0 à T3). Les résultats des propriétés mesurées après cuisson sont présentés au tableau 2.

Les taux des différents constituants des compositions présentées dans le tableau 1 sont exprimés en pce. Toutes les compositions (T0 à T3 et C1 à C2) comprennent un système de réticulation classiquement utilisé dans la fabrication de bandes de roulement pour pneumatique ; ce système de réticulation comprenant notamment du soufre, du ZnO de l'acide stéarique et un accélérateur.

**Tableau 1**

| | **T0** | **T1** | **T2** | **T3** | **C1** | **C2** |
|---|---|---|---|---|---|---|
| **SBR (1)** | - | - | 80.00 | - | 80.00 | 80.00 |
| **SBR (2)** | 40.00 | 80.00 | - | 80.00 | - | - |
| **NR (3)** | 40.00 | - | - | - | - | - |
| **BR (4)** | 20.00 | 20.00 | 20.00 | 20.00 | 20.00 | 20.00 |
| **Silice (5)** | - | - | - | 58.00 | 58.00 | 65.00 |
| **Noir de carbone (6)** | 58.00 | 58.00 | 58.00 | 4.00 | 4.00 | 4.00 |
| **Résine (7)** | 5.00 | 5.00 | 5.00 | 5.00 | 5.00 | 5.00 |
| **Agent de couplage (8)** | - | - | - | 4.64 | 4.64 | 5.20 |
| **DPG (9)** | - | - | - | 1.30 | 1.30 | 1.30 |
| **Antioxydant (10)** | 2.00 | 2.00 | 2.00 | 2.00 | 2.00 | 2.00 |
| **Paraffine** | 1.00 | 1.00 | 1.00 | 1.00 | 1.00 | 1.00 |
| *(1) SBR solution non fonctionnel, non étendu, avec 24% de motifs polybutadiène 1,2 ; 26.5% de motifs styrène et une Tg* = *-48°C ;* | | | | | | |
| *(2) SBR solution fonctionnalisé étain, non étendu, avec 24% de motifs polybutadiène 1,2 : 15,5% de motif styrène, et une Tg* = *-65° C ;* | | | | | | |
| *(3) Caoutchouc naturel ;* | | | | | | |
| *(4) Polybutadiène Néodyme avec 98% de motifs 1,4-cis butadiène et une Tg* = *-108°C ;* | | | | | | |
| *(5) Silice* « *Zeosil 1165 MP » type « HDS » de la société Solvay* ; | | | | | | |
| *(6) Noir de carbone N134 ;* | | | | | | |
| *(7) Résine coupe C5*/*C9 commercialisée par la société Cray Valley sous la dénomination* « *Résine THER 8644 » (Tg* = *44°C) ;* | | | | | | |
| *(8) Agent de couplage : TESPT (« Si69* » *de la société Evonik - Degussa) ;* | | | | | | |
| *(9) Diphénylguanidine (« Perkacit » DPG de la société Flexsys) ;* | | | | | | |
| *(10) N-1,3-diméthylbutyl-N-phényl-para-phénylènediamine commercialisée par la société Flexsys sous la dénomination "Santoflex 6-PPD".* | | | | | | |

La composition T1 diffère de la composition T0 par la nature de la matrice élastomérique. La quantité de copolymère styrène butadiène (SBR) ayant une température de transition vitreuse égale à -65°C a été augmentée. Ce copolymère est le copolymère majoritaire dans la composition T1. La charge majoritaire est du noir de carbone.

La composition T2 diffère de la composition T1 par la nature du copolymère SBR. Le SBR utilisée dans la composition T2 présente une température de transition vitreuse plus élevée que celle du copolymère SBR de la composition T1.

La composition T3 diffère de la composition T1 par la nature de la charge renforçante. La charge organique noir de carbone de la composition T1 a été remplacée par une charge inorganique : de la silice. Le taux de charge est sensiblement équivalent.

La composition C1, selon l'invention, diffère de la composition T3 par la nature du copolymère SBR. Le SBR utilisée dans la composition C1 présente une température de transition vitreuse plus élevée que celle du copolymère SBR de la composition T3.

La composition C2, selon l'invention, diffère de la composition C1 en ce que le taux de silice a été augmenté.

Les propriétés des compositions sont présentées dans le tableau 2 ci-dessous.

**Tableau 2**

| | **T0** | **T1** | **T2** | **T3** | **C1** | **C2** |
|---|---|---|---|---|---|---|
| **Allongement à la rupture (%)** | 100 | 87 | 99 | 68 | 75 | 75 |
| **Déchirabilité- Energie rupture** | 100 | 120 | 189 | 69 | 105 | 125 |
| **G^{∗}50% (MPa)** | 100 | 134 | 129 | 147 | 130 | 150 |
| **tan(δ)max** | 100 | 125 | 133 | 87 | 90 | 95 |

Bien que certaines de ses propriétés soient améliorées (par rapport à la composition T0), la composition T1 présente des propriétés d'hystérèse qui ne sont pas acceptables. Le compromis de performance n'est donc pas obtenu avec cette composition. Le même constat est effectué avec la composition T2. La composition T3 présente une amélioration des propriétés d'hystérèse mais au détriment de ses propriétés limites qui sont dégradées de manière trop importante. Le compromis de performances n'est également pas obtenu avec la composition T3.

On constate que les compositions C1 et C2 qui représentent les compositions selon l'invention, ont, de manière surprenante, un bon compromis de performances par rapport aux compositions témoins T2 et T3. Cette constatation est d'autant plus surprenante, qu'il apparait clairement au vu des compositions témoins T2 et T3 que l'utilisation d'un SBR ayant une température de transition vitreuse élevée et que l'utilisation de silice à titre de charge renforçante majoritaire impactent de manière négative les propriétés de ces compositions. On n'aurait donc pas combiné ces deux composés dans le but d'améliorer le compromis de performances. Or, de façon surprenante, on constate que la combinaison d'un SBR ayant une température de transition vitreuse élevée avec une charge siliceuse permet d'améliorer à la fois les priorités d'hystérèse et les propriétés limites.

L'amélioration des propriétés mécaniques traduite par le gain en rigidité est favorable en matière de résistance à l'usure d'un pneumatique muni d'une bande de roulement constituée par une telle composition.

L'amélioration des propriétés hystérétiques est favorable pour diminuer la résistance au roulement d'un pneumatique muni d'une bande de roulement constituée par une telle composition.

L'amélioration des propriétés limites (déchirabilité et allongement à la rupture) est favorable en matière de résistance aux agressions d'un pneumatique muni d'une bande de roulement constituée par une telle composition.

En conclusion, ces résultats montrent que la combinaison spécifique d'un SBR ayant une température de transition vitreuse strictement supérieure à -65°C et inférieure ou égale à -30°C comme étant le copolymère majoritaire dans la matrice élastomère avec une charge majoritaire qui est une silice permet, de manière surprenante, d'obtenir des propriété de rigidité, des propriétés limites et de propriétés d'hystérèse comparables, voire améliorées, par rapport à une composition témoin classiquement utilisée pour la fabrication de bande de roulement pour pneumatiques destinés à équiper des véhicules porteurs de lourdes charges.

### II-4 : Essai B :

Les exemples présentés dans le tableau 3 ont pour objet de montrer les différentes propriétés de caoutchouterie des compositions conformes à l'invention (C3 à C5) en fonction du taux de silice. Les résultats des propriétés mesurées après cuisson sont présentés au tableau 4 et sont comparés aux résultats de la composition T0 précédemment décrite.

Les taux des différents constituants des compositions présentées dans le tableau 3 sont exprimés en pce. Toutes les compositions (C3 à C5) comprennent un système de réticulation classiquement utilisé dans la fabrication de bandes de roulement pour pneumatique ; ce système de réticulation comprenant du soufre, du ZnO de l'acide stéarique et un accélérateur.

**Tableau 3**

| | **T0** | **C3** | **C4** | **C5** |
|---|---|---|---|---|
| **SBR (1)** | - | 65.00 | 65.00 | 65.00 |
| **SBR (2)** | 40.00 | - | - | - |
| **NR (3)** | 40.00 | 15.00 | 15.00 | 15.00 |
| **BR (4)** | 20.00 | 20.00 | 20.00 | 20.00 |
| **Silice (5)** | - | 60.00 | 64.00 | 68.00 |
| **Noir de carbone (6)** | 58.00 | 4.00 | 4.00 | 4.00 |
| **Agent de couplage (7)** | - | 6.00 | 6.40 | 6.80 |
| **DPG (8)** | - | 0.90 | 0.90 | 0.90 |
| **Antioxydant (9)** | 2.00 | 2.00 | 2.00 | 2.00 |
| **Résine (10)** | 5.00 | 3.00 | 3.00 | 3.00 |
| **Paraffine** | 1.00 | 1.00 | 1.00 | 1.00 |
| *(1) SBR solution non fonctionnel, non étendu, avec 24% de motifs polybutadiène 1,2 ; 26.5% motifs de styrène et une Tg* = *-48°C ;* | | | | |
| *(2) SBR solution fonctionnalisé étain, non étendu, avec 24% de motifs polybutadiène 1,2 : 15,5% de motif styrène, et une Tg = -65° C;* | | | | |
| *(3) Caoutchouc naturel ;* | | | | |
| *(4) Polybutadiène Néodyme avec* 98% *de 1,4-cis et une Tg* = -*108°C ;* | | | | |
| *(5) Silice* « Zeosil *1165 MP » type « HDS » de la société Solvay* ; | | | | |
| *(6) Noir de carbone N134 ;* | | | | |
| *(7) Agent de couplage : TESPT (« Si69* » *de la société Evonik - Degussa) ;* | | | | |
| *(8) Diphénylguanidine (« Perkacit » DPG de la société Flexsys) ;* | | | | |
| *(9) N-1,3-diméthylbutyl-N-phényl-para-phénylènediamine commercialisée par la société Flexsys sous la dénomination "Santoflex 6-PPD" ;* | | | | |
| *(10) Résine coupe C5*/*C9 commercialisée par la société Cray Valley sous la dénomination* « *Résine THER 8644 » (Tg = 44°C).* | | | | |

**Tableau 4**

| | **T0** | **C3** | **C4** | **C5** |
|---|---|---|---|---|
| **Allongement à la rupture (%)** | 100 | 85 | 76 | 82 |
| **Déchirabilité- Energie rupture** | 100 | 84 | 123 | 115 |
| **G^{∗}50% (MPa)** | 100 | 139 | 160 | 169 |
| **tan(δ)max** | 100 | 89 | 88 | 90 |

Les compositions C3 à C5 selon l'invention représentent un autre mode de réalisation de l'invention dans laquelle la matrice élastomérique est un mélange ternaire. Le taux de silice a été progressivement augmenté dans ces compositions.

Le tableau 4 montre les propriétés des compositions C3 à C5 selon l'invention par rapport à la composition T0 qui est classiquement utilisée pour la fabrication de bande de roulement de pneumatiques destinés à équiper des véhicules portant de lourdes charges.

On constate que les trois compositions selon l'invention C3, C4 et C5 présentent de manière surprenante un bon compris de performances.

### II-5 : Essai C

Les exemples présentés dans le tableau 5 ont pour objet de montrer les différentes propriétés de caoutchouterie des compositions conformes à l'invention (C6 à C8) en fonction de différents taux de résine plastifiante. Les résultats des propriétés mesurées après cuisson sont présentés au tableau 6.

Les taux des différents constituants des compositions présentées dans le tableau 5 sont exprimés en pce. Toutes les compositions (C6 à C8) comprennent un système de réticulation classiquement utilisé dans la fabrication de bandes de roulement pour pneumatique ; ce système de réticulation comprenant du soufre, du ZnO de l'acide stéarique et un accélérateur.

**Tableau 5**

| | **T0** | **C6** | **C7** | **C8** |
|---|---|---|---|---|
| **SBR (1)** | - | 65.00 | 65.00 | 65.00 |
| **SBR (2)** | 40.00 | - | - | - |
| **NR (3)** | 40.00 | 15.00 | 15.00 | 15.00 |
| **BR (4)** | 20.00 | 20.00 | 20.00 | 20.00 |
| **Silice (5)** | - | 68.00 | 68.00 | 68.00 |
| **Noir de carbone (6)** | 58.00 | 4.00 | 4.00 | 4.00 |
| **Agent de couplage (7)** | - | 6.80 | 6.80 | 6.80 |
| **DPG (8)** | - | 0.90 | 0.90 | 0.90 |
| **Antioxydant (9)** | 2.00 | 2.00 | 2.00 | 2.00 |
| **Résine (10)** | 5.00 | 3.00 | 8.00 | 12.00 |
| **Paraffine** | 1.00 | 1.00 | 1.00 | 1.00 |
| *(1) SBR solution non fonctionnel, non étendu, avec 24% de motifs polybutadiène 1,2 ; 26.5% motifs de styrène et une Tg = -48°C ;* | | | | |
| *(2) SBR solution fonctionnalisé étain, non étendu, avec 24% de motifs polybutadiène 1,2 :* 15,5% *de motif styrène, et une Tg* = -*65° C* ; | | | | |
| *(3) Caoutchouc naturel ;* | | | | |
| *(4) Polybutadiène Néodyme avec 98% de 1,4-cis et une Tg* = *-108°C ;* | | | | |
| *(5) Silice* « Zeosil *1165 MP » type « HDS » de la société Solvay* ; | | | | |
| *(6) Noir de carbone N134 ;* | | | | |
| *(7) Agent de couplage : TESPT (« Si69* » *de la société Evonik - Degussa) ;* | | | | |
| *(8) Diphénylguanidine (« Perkacit » DPG de la société Flexsys) ;* | | | | |
| *(9) N-1,3-diméthylbutyl-N-phényl-para-phénylènediamine commercialisée par la société Flexsys sous la dénomination "Santoflex 6-PPD" ;* | | | | |
| *(10) Résine coupe* C5/C9 *commercialisée par la société Cray Valley sous la dénomination* « *Résine THER* 8644 » *(Tg = 44°C).* | | | | |

**Tableau 6**

| | **T0** | **C6** | **C7** | **C8** |
|---|---|---|---|---|
| **Allongement à la rupture (%)** | 100 | 82 | 83 | 84 |
| **Déchirabilité- Energie rupture** | 100 | 115 | 118 | 125 |
| **G^{∗}50% (MPa)** | 100 | 168 | 147 | 140 |
| **tan(δ)max** | 100 | 90 | 90 | 91 |

Les compositions C6 à C8 selon l'invention représentent un autre mode de réalisation de l'invention dans laquelle la matrice élastomérique est un mélange ternaire et dans lequel le taux de silice est plus élevé par rapport à celui des compositions C1 et C2. Le taux de résine a été progressivement augmenté dans les compositions C6 à C8.

Le tableau 6 montre les propriétés des compositions C6 à C8 selon l'invention par rapport à la composition T0 qui est classiquement utilisée pour la fabrication de bande de roulement de pneumatiques destinés à équiper des véhicules portant de lourdes charges.

On constate que les trois compositions selon l'invention C6, C7 et C8 présentent de manière surprenante un bon compris de performances.

### II-5 : Essai D

L'exemple présenté dans le tableau 7 a pour objet de montrer les différentes propriétés de caoutchouterie d'une composition conforme à l'invention (C9) ne comprenant pas de résine. Les résultats des propriétés mesurées après cuisson sont présentés au tableau 8.

Les taux des différents constituants de la composition présentée dans le tableau 7 sont exprimés en pce. La composition C9 comprend un système de réticulation classiquement utilisé dans la fabrication de bandes de roulement pour pneumatique ; ce système de réticulation comprenant du soufre, du ZnO de l'acide stéarique et un accélérateur.

**Tableau 7**

| | **T0** | **C9** |
|---|---|---|
| **SBR (1)** | - | 65.00 |
| **SBR (2)** | 40.00 | |
| **NR (3)** | 40.00 | 15.00 |
| **BR (4)** | 20.00 | 20.00 |
| **Silice (5)** | - | 58.00 |
| **Noir de carbone (6)** | 58.00 | 4.00 |
| **Agent de couplage (7)** | - | 5.80 |
| **DPG (8)** | - | 0.45 |
| **Antioxydant (9)** | 2.00 | 2.00 |
| **Résine (10)** | 5.00 | - |
| **Paraffine** | 1.00 | 1.00 |
| *(1) SBR solution non fonctionnel, non étendu, avec 24% de motifs polybutadiène 1,2 ;* 26.5% motifs de styrène et une Tg = -48°C ; | | |
| *(2) SBR solution fonctionnalisé étain, non étendu, avec 24% de motifs polybutadiène 1,2 : 15,5% de motif styrène, et une Tg = -65° C ;* | | |
| *(3) Caoutchouc naturel ;* | | |
| *(4) Polybutadiène Néodyme avec 98% de 1,4-cis et une Tg* = *-108°C ;* | | |
| *(5) Silice* « Zeosil *1165 MP » type « HDS » de la société Solvay* ; | | |
| *(6) Noir de carbone N134 ;* | | |
| *(7) Agent de couplage : TESPT (« Si69* » *de la société Evonik - Degussa) ;* | | |
| *(8) Diphénylguanidine (« Perkacit » DPG de la société Flexsys) ;* | | |
| *(9) N-1,3-diméthylbutyl-N-phényl-para-phénylènediamine commercialisée par la société Flexsys sous la dénomination "Santoflex 6-PPD" ;* | | |
| *(10) Résine coupe* C5/C9 *commercialisée par la société Cray Valley sous la dénomination « Résine THER 8644 » (Tg = 44°C).* | | |

**Tableau 8**

| | **T0** | **C9** |
|---|---|---|
| **Allongement à la rupture (%)** | 100 | 83 |
| **Déchirabilité- Energie rupture** | 100 | 125 |
| **G*50% (MPa)** | 100 | 140 |
| **tan(δ)max** | 100 | 89 |

La composition C9 selon l'invention représente un autre mode de réalisation de l'invention dans laquelle la matrice élastomérique est un mélange ternaire. Cette composition ne comprend pas de résine.

Le tableau 8 montre les propriétés de la composition C9 selon l'invention par rapport à la composition T0 qui est classiquement utilisée pour la fabrication de bande de roulement de pneumatiques destinés à équiper des véhicules portant de lourdes charges.

On constate que la composition selon l'invention C9 présente de manière surprenante un bon compris de performances.

## Revendications

1. Pneumatique destiné à équiper un véhicule portant de lourdes charges choisi parmi les véhicules poids-lourds, les bus, les véhicules de génie civile, les véhicules agricoles ou les avions, ce pneumatique comportant une bande de roulement ayant au moins une composition de caoutchouc à base d'au moins:
- une matrice élastomère comprenant à titre majoritaire un copolymère à base de styrène et de butadiène ayant une température de transition vitreuse Tg strictement supérieure à -65°C et inférieure ou égale à -30°C, de préférence allant de -60°C à -40°C, et en outre au moins un deuxième élastomère diénique choisi dans le groupe formé par les polybutadiènes, le caoutchouc naturel, les isoprènes de synthèse, les copolymères butadiènes autre que les copolymères butadiène-styrène, les copolymères d'isoprènes et les mélanges de ces polymères et copolymères ; le taux du deuxième élastomère diénique va de 5 à 49 pce ;
- une charge renforçante comprenant à titre majoritaire de la silice,
- un système de réticulation chimique,
- un agent de couplage, et
- un système plastifiant comprenant de 0 à 15 pce, de préférence de 0 à 9 pce, d'au moins une résine plastifiante ayant une température de transition vitreuse Tg supérieure ou égale à 20°C et de 0 à 2 pce d'au moins un agent plastifiant liquide à température ambiante, et dont le taux total du système plastifiant dans la composition va de 0 à 17 pce, de préférence de 0 à 11 pce.

2. Pneumatique selon la revendication 1, dans lequel le système plastifiant comprend de 2 à 15 pce, de préférence de 2 à 9 pce de la résine plastifiante, le taux total du système plastifiant dans la composition va de 2 à 17 pce, de préférence de 2 à 11 pce.

3. Pneumatique selon l'une quelconque des revendications 1 à 2, dans lequel le copolymère à base de styrène et de butadiène est obtenu par polymérisation en solution.

4. Pneumatique selon l'une quelconque des revendications 1 à 3, dans lequel le copolymère à base de styrène et à base de butadiène est un copolymère styrène-butadiène.

5. Pneumatique selon l'une quelconque des revendications 1 à 4, dans lequel le deuxième élastomère diénique est un polybutadiène.

6. Pneumatique selon la revendication 5, dans lequel le taux du deuxième élastomère diénique va de 15 à 35 pce.

7. Pneumatique selon la revendication 5, dans lequel la matrice élastomère comprend en outre au moins un troisième élastomère diénique différent du copolymère à base de styrène et de butadiène et du deuxième élastomère diénique.

8. Pneumatique selon la revendication 7, dans lequel le troisième élastomère diénique est choisi parmi le caoutchouc naturel et un élastomère isoprénique, de préférence il est constitué par du caoutchouc naturel.

9. Pneumatique selon la revendication 7 ou 8, dans lequel le taux du deuxième élastomère diénique va de 0,5 à 35 pce et le taux du troisième élastomère diénique va de 0,5 à 35 pce, de préférence le taux du deuxième élastomère diénique va de 9 à 31 pce et le taux du troisième élastomère diénique va de 4 à 24 pce.

10. Pneumatique selon l'une quelconque des revendications 1 à 9, dans lequel le taux de la charge renforçante va de 55 à 200 pce, de préférence de 55 à 150 pce, de manière plus préférée de 55 à 80 pce.

11. Pneumatique selon l'une quelconque des revendication 1 à 10, dans lequel la résine plastifiante a une température de transition vitreuse Tg supérieure ou égale à 30°C, de préférence allant de à 30 à 100°C.

12. Pneumatique selon l'une quelconque des revendications 1 à 11, dans lequel la résine plastifiante est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les mélanges de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

13. Pneumatique selon l'une quelconque des revendications 1 à 12, dans lequel la composition est exempte d'un système plastifiant.

14. Pneumatique selon l'une quelconque des revendications 1 à 13, **caractérisé en ce qu'**il est destiné à équiper un véhicule poids-lourd.

## Patentansprüche

1. Reifen zur Ausstattung eines schwere Lasten tragenden Fahrzeugs, wobei dieser Reifen aus Schwerlastfahrzugen, Bussen, Baumaschinen, landwirtschaftlichen Farzeugen or Flugzeugen ausgewählt ist, wobei dieser Reifen eine Lauffläche umfasst, die mindestens eine Kautschukzusammensetzung auf Basis von mindestens:
- einer Elastomermatrix, die hauptsächlich ein Copolymer auf Basis von Styrol und Butadien mit einer Glasübergangstemperatur Tg, die streng größer als -65 °C und kleiner oder gleich -30 °C ist und vorzugsweise im Bereich von -60 °C bis - 40 °C liegt, sowie mindestens ein zweites Dienelastomer, das aus der Gruppe bestehend aus Polybutadienen, Naturkautschuk, synthetischen Isoprenen, Butadien-Copolymeren, die von Butadien-Styrol-Copolymeren verschieden sind, Isopren-Copolymeren und Mischungen dieser Polymere und Copolymere ausgewählt ist, umfasst; wobei der Gehalt des zweiten Dienelastomers im Bereich von 5 bis 49 phe liegt;
- einem verstärkenden Füllstoff, der hauptsächlich Kieselsäure umfasst,
- einem chemischen Vernetzungssystem,
- einem Kupplungsmittel und
- einem Weichmachersystem, umfassend 0 bis 15 phe, vorzugsweise 0 bis 9 phe, mindestens eines Weichmacherharzes mit einer Glasübergangstemperatur Tg größer oder gleich 20 °C und von 0 bis 2 phe mindestens eines bei Umgebungstemperatur flüssigen Weichmachers umfasst, wobei der Gesamtgehalt des Weichmachersystems in der Zusammensetzung im Bereich von 0 bis 17 phe, vorzugsweise 0 bis 11 phe, liegt,
aufweist.

2. Reifen nach Anspruch 1, wobei das Weichmachersystem 2 bis 15 phe, vorzugsweise 2 bis 9 phe, des Weichmacherharzes umfasst, wobei der Gesamtgehalt des Weichmachersystems in der Zusammensetzung im Bereich von 2 bis 17 phe, vorzugsweise 2 bis 11 phe, liegt.

3. Reifen nach einem der Ansprüche 1 bis 2, wobei das Copolymer auf Basis von Styrol und Butadien durch Lösungspolymerisation erhalten wird.

4. Reifen nach einem der Ansprüche 1 bis 3, wobei es sich bei dem Copolymer auf Basis von Styrol und auf Basis von Butadien um ein Styrol-Butadien-Copolymer handelt.

5. Reifen nach einem der Ansprüche 1 bis 4, wobei es sich bei dem zweiten Dienelastomer um ein Polybutadien handelt.

6. Reifen nach Anspruch 5, wobei der Gehalt des zweiten Dienelastomers im Bereich von 15 bis 35 phe liegt.

7. Reifen nach Anspruch 5, wobei die Elastomermatrix außerdem mindestens ein drittes Dienelastomer, das von dem Copolymer auf Basis von Styrol und Butadien und dem zweiten Dienelastomer verschieden ist, umfasst.

8. Reifen nach Anspruch 7, wobei das dritte Dienelastomer aus Naturkautschuk und einem Isoprenelastomer ausgewählt ist und vorzugsweise aus Naturkautschuk besteht.

9. Reifen nach Anspruch 7 oder 8, wobei der Gehalt des zweiten Dienelastomers im Bereich von 0,5 bis 35 phe liegt und der Gehalt des dritten Dienelastomers im Bereich von 0,5 bis 35 phe liegt, vorzugsweise der Gehalt des zweiten Dienelastomers im Bereich von 9 bis 31 phe liegt und der Gehalt des dritten Dienelastomers im Bereich von 4 bis 24 phe liegt.

10. Reifen nach einem der Ansprüche 1 bis 9, wobei der Gehalt des verstärkenden Füllstoffs im Bereich von 55 bis 200 phe, vorzugsweise von 55 bis 150 phe, weiter bevorzugt von 55 bis 80 phe, liegt.

11. Reifen nach einem der Ansprüche 1 bis 10, wobei das Weichmacherharz eine Glasübergangstemperatur Tg größer oder gleich 30 °C, vorzugsweise im Bereich von 30 bis 100 °C, aufweist.

12. Reifen nach einem der Ansprüche 1 bis 11, wobei das Weichmacherharz aus der Gruppe bestehend aus Cyclopentadien-Homopolymer- oder Copolymerharzen, Dicyclopentadien-Homopolymer- oder Copolymerharzen, Terpen-Homopolymer- oder Copolymerharzen, C5-Schnitt-Homopolymer- oder Copolymerharzen, C9-Schnitt-Homopolymer- oder Copolymerharzen, Mischungen von C5-Schnitt-Homopolymer- oder Copolymerharzen und C9-Schnitt-Homopolymer- oder Copolymerharzen, alpha-Methylstyrol-Homopolymer- oder Copolymerharzen, und Mischungen dieser Harze ausgewählt ist.

13. Reifen nach einem der Ansprüche 1 bis 12, wobei die Zusammensetzung kein Weichmachersystem enthält.

14. Reifen nach einem der Ansprüche 1 bis 13, **dadurch gekennzeichnet, dass** er zur Ausstattung eines Schwerlastfahrzeugs vorgesehen ist.

## Claims

1. Tyre intended to equip a vehicle bearing heavy loads chosen from heavy-duty vehicles, buses, civil engineering vehicles, agricultural vehicles or aircraft, this tyre comprising a tread having at least one rubber composition based on at least:
- an elastomer matrix predominantly comprising a copolymer based on styrene and butadiene having a glass transition temperature Tg strictly above -65°C and below or equal to -30°C, preferably ranging from -60°C to -40°C, and further comprising at least one second diene elastomer selected from the group consisting of polybutadienes, natural rubber, synthetic isoprenes, butadiene copolymers other than butadiene-styrene copolymers, isoprene copolymers and mixtures of these polymers and copolymers; the content of the second diene elastomer ranges from 5 to 49 phr,
- a reinforcing filler predominantly comprising silica,
- a chemical crosslinking system,
- a coupling agent, and
- a plasticizing system comprising from 0 to 15 phr, preferably from 0 to 9 phr, of at least one plasticizing resin having a glass transition temperature Tg above or equal to 20°C and from 0 to 2 phr of at least one plasticizing agent that is liquid at ambient temperature, and of which the total content of the plasticizing system in the composition ranges from 0 to 17 phr, preferably from 0 to 11 phr.

2. Tyre according to Claim 1, in which the plasticizing system comprises from 2 to 15 phr, preferably from 2 to 9 phr of the plasticizing resin, the total content of the plasticizing system in the composition ranges from 2 to 17 phr, preferably from 2 to 11 phr.

3. Tyre according to either one of Claims 1 and 2, in which the copolymer based on styrene and butadiene is obtained by solution polymerization.

4. Tyre according to any one of Claims 1 to 3, in which the copolymer based on styrene and based on butadiene is a styrene-butadiene copolymer.

5. Tyre according to any one of Claims 1 to 4, in which the second diene elastomer is a polybutadiene.

6. Tyre according to Claim 5, in which the content of the second diene elastomer ranges from 15 to 35 phr.

7. Tyre according to Claim 5, in which the elastomer matrix further comprises at least one third diene elastomer different from the copolymer based on styrene and butadiene and from the second diene elastomer.

8. Tyre according to Claim 7, in which the third diene elastomer is selected from natural rubber and an isoprene elastomer, preferably it consists of natural rubber.

9. Tyre according to Claim 7 or 8, in which the content of the second diene elastomer ranges from 0.5 to 35 phr and the content of the third diene elastomer ranges from 0.5 to 35 phr, preferably the content of the second diene elastomer ranges from 9 to 31 phr and the content of the third diene elastomer ranges from 4 to 24 phr.

10. Tyre according to any one of Claims 1 to 9, in which the content of reinforcing filler ranges from 55 to 200 phr, preferably from 55 to 150 phr, more preferably from 55 to 80 phr.

11. Tyre according to any one of Claims 1 to 10, in which the plasticizing resin has a glass transition temperature Tg above or equal to 30°C, preferably ranging from 30 to 100°C.

12. Tyre according to any one of Claims 1 to 11, in which the plasticizing resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, mixtures of C₅ fraction homopolymer or copolymer resins and of C₉ fraction homopolymer or copolymer resins, α-methylstyrene homopolymer or copolymer resins and the mixtures of these resins.

13. Tyre according to any one of Claims 1 to 12, in which the composition is free of a plasticizing system.

14. Tyre according to any one of Claims 1 to 13, **characterized in that** it is intended to equip a heavy-duty vehicle.
